# EUROPEAN PATENT SPECIFICATION

(11) **EP 1 469 033 B1**
(45) Date of publication and mention of the grant of the patent: **03.10.2007**
(21) Application number: 04252245.8
(22) Date of filing: 16.04.2004
(51) Int. Cl.: C08K 3/04, E03B 7/00

(54) **Water piping equipment comprising 1-butene-based polymer composition**
Wasserleitungssystem entaltend eine Polymerzusammensetzung auf 1-Butenbasis
Système de conduite d'eau qui comprend une composition à base de polymère de 1-butène

(30) Priority: 18.04.2003 JP 2003114171
(43) Date of publication of application: 20.10.2004
(73) Proprietor: Mitsui Chemicals, Inc., Tokyo (JP)
(72) Inventor: Komiya, Kan, Ichihara-shi, Chiba (JP); Tokui, Shin, Ichihara-shi, Chiba (JP)
(74) Representative: Cresswell, Thomas Anthony

(56) References cited:
- US-A- 4 321 334
- DATABASE WPI Section Ch, Week 198717 Derwent Publications Ltd., London, GB; Class A17, AN 1987-119200 XP002289091 & JP 62 062845 A (MITSUBISHI PETROCHEMICAL CO LTD) 19 March 1987 (1987-03-19)
- PATENT ABSTRACTS OF JAPAN vol. 0135, no. 06 (M-892), 14 November 1989 (1989-11-14) & JP 1 203787 A (MITSUBISHI PETROCHEM CO LTD), 16 August 1989 (1989-08-16)

## Description

### BACKGROUND OF THE INVENTION

### 1. Field of the Invention

The present invention relates to water piping equipment, for example a pipe for carrying water or a tank for storing water, molded from a specific 1-butene homopolymer and/or a 1-butene-based copolymer composition containing a specific amount of black pigment; according to this water piping equipment, the rate of crystal transition, which is a phenomenon peculiar to 1-butene homopolymers and/or 1-butene-based copolymers, is improved, and hence quality control and stock control are made easy, and at the same time the pigment dispersion is made uniform, and the resistance to chlorinated water is improved.

### 2. Description of the Related Art

It is well known that poly-1-butene-based polymers are useful from the standpoint of creep resistance properties and so on as materials for resin molded articles for storing or transporting cold/warm water.

However, 1-butene homopolymers and 1-butene-based copolymers adopt a metastable type II crystal structure immediately after being cooled and shaped from a molten state into a molded article, and then undergo solid phase crystal transition to a more stable type I crystal structure over approximately one week (Journal of Polymer Science: Part A, Vol. 1, pages 59-84 (1963). Consequently, due to this crystal transition, changes in the dimensions and rigidity occur after the molding, and furthermore because the transition rate is slow, there has been a drawback that quality control and stock control at a customer is troublesome. In the field of melt molding of polybutene-based resins, there have thus been demands for 1-butene homopolymers or 1-butene-based copolymers for which the rate of the crystal transition from the type II crystal structure to the type I crystal structure is fast. In response to these demands, with an objective of improving the crystal transition rate, for example a method in which a radical-treated crystalline olefinic polymer is blended in (see Japanese Patent Application Laid-open No. 61-037833), and a method in which an additive is added (see Japanese Patent Application Laid-open No. 57-036140 and Japanese Patent Application Laid-open No. 57-092038) are known, but such methods are still not satisfactory in terms of the cost of molding pipes and tanks and the effect of improving the crystal transition rate, and hence there have been demands for further improvements.

Moreover, chlorine is generally used in sterilizing agents contained in tap water (i.e. drinking water, and there has been a problem that depending on the type of the pigment contained in water-transporting pipes and so on, such chlorine may promote generation of bubbles on the inner surface of the pipes, peeling off of thin resin films and so on, and thus cause pipe blockages. In consideration of cases in which resin pipes comprising a 1-butene-based polymer are used or stored outdoors, pipes are sometimes colored a dark black color to improve the weather resistance, and from hitherto furnace method carbon black, which is a readily obtainable black pigment, has been used (see Japanese Patent Application Laid-open No. 62-263242). However, it is known that with resin pipes containing furnace method carbon black, generation of bubbles, cracking, and peeling off of a surface layer resin are promoted by chlorine, and this has been a problem from the perspective of the durability of the resin pipes (see Japanese Patent Application Laid-open No. 10-310705). The document US 4 321 334 discloses Melt crystallization of Butene-1 Polymers with prophitic non-turbostratic carbon.

### SUMMARY OF THE INVENTION

It is a problem of the present invention, for the case of water piping equipment comprising a 1-butene-based polymer, to improve both the crystal transition rate and the resistance to chlorinated water, which have been problems in the past, thus making quality control and stock control easier, and moreover preventing the generation of bubbles and cracking due to chlorine and reducing the promotion due to chlorine of peeling off of a surface layer resin in the case of carrying tap water.

The present inventors carried out assiduous studies to solve the above problem, and as a result arrived at the present invention after discovering that, if a specific amount of acetylene black is mixed in a specific 1-butene homopolymer and/or a 1-butene-based copolymer, the crystal transition phenomenon originally possessed by the 1-butene homopolymer or 1-butene-based copolymer is promoted, and a composition with excellent pigment dispersion and excellent resistance to chlorinated water can be obtained.

That is, the present invention is water piping equipment comprising a 1-butene-based polymer composition containing 0.01 to 5.0 parts by weight of acetylene black per 100 parts by weight of a specific 1-butene homopolymer and/or a 0.02 1-butene-based copolymer.

The present invention also relates to the said 1-butene-based polymer composition and to molded articles comprising the said 1-butene-based polymer composition.

With the water piping equipment obtained from a specific 1-butene homopolymer and/or 1-butene copolymer composition containing a specific amount of acetylene black according to the present invention, the crystal transition time is short, and hence quality control and stock control are easy, and furthermore resistance to chlorinated water and pigment dispersibility are excellent, and hence prolonged usage is possible.

### DESCRIPTION OF THE PREFERRED EMBODIMENTS

Following is a concrete description of the present invention.

### 1-butene homopolymer and/or a 1-butene-based copolymer (A)

The 1-butene homopolymer and/or 1-butene-based copolymer (A) in the present invention comprises preferably 80 to 100 mol%, more preferably 90 to 100 mol%, of polymer units (a) derived from 1-butene, and preferably 0 to 20 mol%, more preferably 0 to 10 mol%, of polymer units (b) derived from at least one α-olefin having 2 to 10 carbon atoms other than 1-butene. (Here, the amount of (a) plus the amount of (b) is taken to be 100 mol%.)

Examples of the α-olefin(s) having 2 to 10 carbon atoms other than 1-butene include ethylene, propylene, 1-pentene, 4-methyl-1-pentene, 1-hexene, 1-octene, 1-decene, and so on. One of these other α-olefins alone, or two or more of these other α-olefins, may be contained in the 1-butene-based copolymer.

The melt flow rate of the poly-1-butene in the present invention at 190°C and a load of 2.16 kg (ASTM D1238) is preferably 0.01 to 50 g/10min, more preferably 0.01 to 20 g/10min,yet more preferably 0.02 to 10 g/10min. The isotactic index of the poly-1-butene in the present invention is at least 90, preferably at least 93, more preferably at least 95.

### Acetylene black (B)

Acetylene black is produced using acetylene gas as a raw material.

The acetylene black in the present invention preferably has a mean particle diameter of 20 to 50 nm, more preferably 30 to 50 nm. It is preferable for the mean particle diameter to be within such a range, since then the crystal transition rate will be increased.

Moreover, the acetylene black in the present invention preferably has a DBP (dibutyl phthalate) oil absorption amount of 100 to 250 ml/100g, more preferably 140 to 220 ml/100g. It is preferable for the DBP oil absorption amount to be within such a range, since then pigment dispersion is good. The method of measuring the DBP oil absorption is in accordance with JIS K6217-4.

### 1-butene-based polymer composition (C)

The 1-butene-based polymer composition (C) in the present invention contains 0.01 to 5.0 parts by weight, preferably 0.05 to 2.0 parts by weight, more preferably 0.1 to 0.4 parts by weight, of the acetylene black per 100 parts by weight of the 1-butene homopolymer and/or 1-butene-based copolymer (A). It is preferable for the acetylene black content to be at least 0.01 parts by weight, since then the crystal transition time will be short. Moreover, it is preferable for the acetylene black content to be not more than 5.0 parts by weight, since then the resistance to chlorinated water will be high.

Moreover, the 1-butene-based polymer composition(C) may contain antioxidants, weather resistance stabilizers, pigments, fungus-proofing agents and so on as required. Examples of heat resistance stabilizers are phenolic antioxidants, phosphor-based antioxidants and so on; one of these can be used alone, or two or more can be used in combination.

Specific examples of such phenolic or phosphor-based antioxidants include 2,6-t-butyl-4-hydroxybenzoate,
n-hexadecyl-3,5-di-t-butyl-4-hydroxybenzoate,
1,3,5-trimethyl-2,4,6-tris(3,5-di-t-butyl-4-hydroxybenzyl) benzene,
1,3,5-tris(4-t-butyl-3-hydroxy-2,6-dimethylphenyl)
isocyanate tris(3,5-di-t-butyl-4-hydroxyphenyl)isocyanate,
n-octadecyl-3-(3,5-di-t-butyl-4-hydroxyphenyl)propionate,
bis (3,5-di-t-butyl-4-hydroxybenzoylphosphonic acid) monoethyl ester nickel salt,
2,2'-dihydroxy-3,3'-di(α-methylcyclohexyl)-5,5'-dimethyldiphenylmethane, 4,4'-thio-bis(3-methyl-6-t-butyl-phenol),
1,1,3-tris(2-methyl-4-hydroxy-5-t-butyl-phenyl(butane),
tetrakis[methylene-3(3,5-di-t-butyl-4-hydroxyphenyl) propionate]methane, 2,6-di-t-butyl-p-cresol,
4,4'-methylene-bis(2,6-di-t-butyl-phenol),
tris(2,4-di-t-butyl-phenyl)phosphite, and vitamin E.

In the case that the polymer composition contains such antioxidant(s), the amount added thereof is generally approximately 0.01 to 2.0 wt%, preferably approximately 0.1 to 1.5 wt%, relative to the 1-butene homopolymer and/or 1-butene-based copolymer (A). In the case that the polymer composition contains a weather resistance stabilizer, a pigment, a fungus-proofing agent, the amount added thereof may be any amount within a range such that the purpose of the present invention is not impaired.

Molded articles comprising the composition (c) of the invention can be produced using any ordinary molding method, for example single-layer or multi-layer (two or more layers) extrusion or blow molding.

### Water piping equipment

In the present invention, water piping equipment means a molded body used for carrying or storing water such as tap water; examples are molded bodies such as water/hot water supply pipes and water storage tanks. Such a molded body may comprise a single layer, or may be a laminated structure of two or more layers (in which case at least one of these layers comprises the 1-butene-based polymer composition (C) containing acetylene black described above).

The polymer composition of the present invention has better resistance to chlorinated water than conventional polymer compositions having a black pigment mixed therein, and hence even in the case of using the polymer composition of the present invention on the side of the water piping equipment that comes into contact with water (e.g. the inside of a water/hot water supply pipe, the inside of a water storage tank), prolonged usage is possible.

The pipe or tank is molded using any ordinary molding method, for example single-layer or multi-layer (two or more layers) extrusion or blow molding.

### (Examples)

Following is a more concrete description of the present invention, giving examples and comparative examples; however, so long as the gist of the present invention is not exceeded, the present invention is not restricted to these examples whatsoever.

### Examples 1 to 8

### <Manufacture of 1-butene homopolymer composition>

100 parts by weight of a 1-butene homopolymer (P5050, made by Mitsui Chemicals Inc.) and 40 parts by weight of acetylene black (Denka Black powder, Denka Black HS-100 or Denka Black FX-35, made by Denki Kagaku Kogyo K.K.) were subjected to melt kneading at a molding temperature of 200°C using a twin screw extruder, thus manufacturing a high-density master batch containing 40 wt% of the acetylene black relative to the 1-butene homopolymer. The master batch obtained and the 1-butene homopolymer were then subjected to melt kneading at a molding temperature of 200°C using a single screw extruder, thus obtaining a 1-butene homopolymer composition containing 0.1 wt% or 2.0 wt% of the acetylene black relative to the 1-butene homopolymer.

### <Manufacture of pipes>

Using each of the above 1-butene homopolymer compositions, pipes of outside diameter 27 mm and wall thickness 2.4 mm were manufactured using an extruder (φ 90 mm single screw, made by Ikegai Ltd.) combined with a single-layer die with a molding temperature of 200°C.

### <Manufacture of tanks>

Using each of the above 1-butene homopolymer compositions, 500 cc tanks having a rectangular parallelepiped shape (external dimensions 180 mm × 120 mm × 28 mm) and a thickness of approximately 3 mm were manufactured using a blow molding machine (φ 40 mm single screw, made by Japan Steel Works Ltd.) with a molding temperature of 200°C.

### <Various Measurement Methods>

In the present examples and so on, measurements were carried out using the following methods.

### <Measurement of crystal transition rate>

Tensile measurement was carried out in accordance with JIS K7113 one, two, three, four and seven days after molding, and the yield point strength was measured. Taking the value when the yield point strength was a maximum to be 100%, the time required to reach 98% was taken as the crystal transition time.

### <Measurement of resistance to chlorinated water>

The specimen was submerged in chlorinated water of concentration 100 ppm and temperature 90°C, and the time until the surface of the specimen turned completely white was measured.

### <Measurement of carbon dispersion>

The carbon dispersion was measured in accordance with ISO 18553.

### (Comparative Examples 1 and 2)

Using the same method as in Example 1 except that the acetylene black was changed to furnace method carbon black, a 1-butene homopolymer composition containing 0.1 wt% or 2.0 wt% of the furnace method carbon black relative to the 1-butene homopolymer was obtained. Using each of these homopolymer compositions, pipes were molded as in Example 1, and the crystal transition rate, the resistance to chlorinated water, and the carbon dispersion were measured. The results are shown in Table 1.

### (Comparative Examples 3 and 4)

Using the same method as in Example 1 except that the acetylene black was changed to iron black, a 1-butene homopolymer composition containing 0.1 wt% or 2.0 wt% of the iron black relative to the 1-butene homopolymer was obtained. Using each of these homopolymer compositions, pipes were molded as in Example 1, and the crystal transition rate, the resistance to chlorinated water, and the pigment dispersion were measured. The results are shown in Table 1.

### (Comparative Examples 5 and 6)

Using the same method as in Example 1 except that the acetylene black was changed to furnace method carbon black, a 1-butene homopolymer composition containing 0.1 wt% or 2.0 wt% of the furnace method carbon black relative to the 1-butene homopolymer was obtained. Using each of these homopolymer compositions, tanks were obtained by blow molding as in Example 7, and the crystal transition rate, the resistance to chlorinated water, and the carbon dispersion were measured. The results are shown in Table 1.

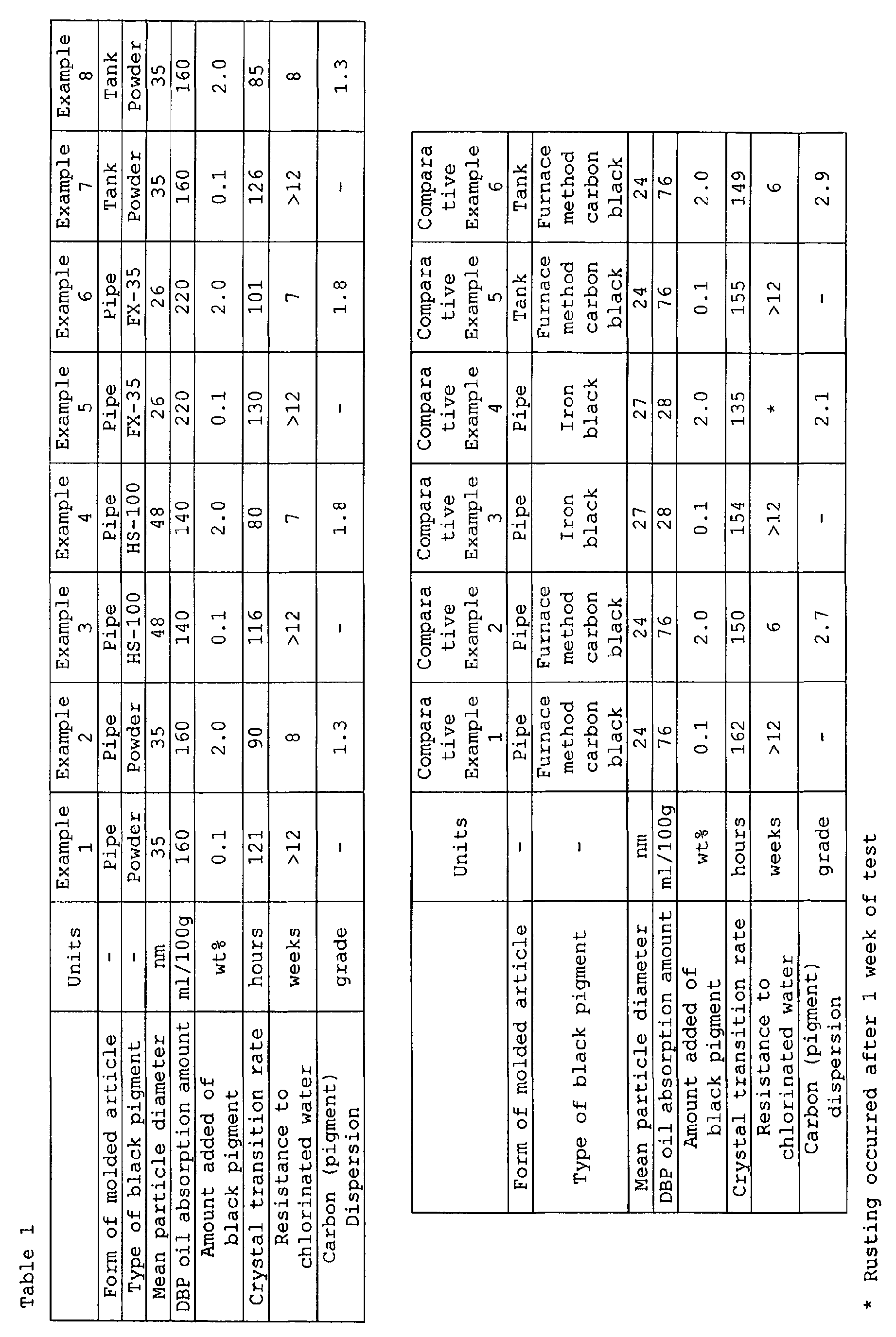

It can be seen from Table 1 that for the pipes/tanks of Comparative Examples 1, 3 and 5 in which furnace method carbon black or iron black was used as the pigment, the crystal transition rate was slower than for the pipes/tanks of Examples 1, 3, 5 and 7 in which acetylene black was used as the pigment. The crystal transition rate of 121 hours for Example 1 corresponds to approximately 5 days, and the crystal transition rate of 162 hours for Comparative Example 1 corresponds to approximately 7 days. This difference of 2 days is reflected as is in the delivery lead time, and hence is a large difference in terms of stock control, and thus it can be seen that the effects of the present invention are great.

Moreover, it can be seen that for the pipes/tanks of Comparative Examples 2, 4 and 6 in which furnace method carbon black or iron black was used as the pigment, the crystal transition rate was slower, the resistance to chlorinated water was worse, and the pigment dispersion was less uniform than for the pipes/tanks of Examples 2, 4, 6 and 8 in which acetylene black was used as the pigment. Incidentally, for the pipes containing iron black of Comparative Example 4, the chlorinated water caused rusting.

According to the present invention, the specific 1-butene homopolymer and/or 1-butene copolymer composition containing a specific amount of acetylene black can be ideally used for water piping equipment, for which quality control and stock control are easy, this being because the crystal transition time is short, and furthermore for which prolonged usage is possible, this being because resistance to chlorinated water and pigment dispersibility are excellent.

## Claims

1. Water piping equipment comprising a 1-butene-based polymer composition (C) containing 0.01 to 5.0 parts by weight of acetylene black (B) per 100 parts by weight of a 1-butene homopolymer and/or a 1-butene-based copolymer (A) that has a melt flow rate of 0.01 to 50 g/10min at 190°C and a load of 2.16 kg according to ASTM D1238 and comprises 80 to 100 mol% of polymer units (a) derived from 1-butene and 0 to 20 mol% of polymer units (b) derived from at least one α-olefin having 2 to 10 carbon atoms other than 1-butene.

2. A water piping equipment according to claim 1, wherein the water piping equipment is a water/hot water supply pipe or a water storage tank.

3. A water piping equipment according to claim 1 or 2, wherein the acetylene black has a mean particle diameter of 20 to 50 nm.

4. A water piping equipment according to any one of claims 1 to 3, wherein the acetylene black has a DBP oil absorption amount of 100 to 250 ml/100g.

5. A water piping equipment according to any one of claims 1 to 4, wherein the isotactic index of the 1-butene homopolymer and/or 1-butene-based copolymer (A) is at least 90.

6. A 1-butene-based polymer composition (c) as defined in any one of claims 1 or 3 to 5.

7. A molded article comprising a 1-butene-based polymer composition (c) as defined in any one of claims 1 or 3 to 5.

## Patentansprüche

1. Wasserleitungsgerätschaft, umfassend eine auf 1-Buten basierende Polymerzusammensetzung (C), die 0,01 bis 5,0 Gewichtsteile Acetylenschwarz (B) pro 100 Gewichtsteile eines 1-Buten-Homopolymers und/oder ein auf 1-Buten basierendes Copolymer (A) enthält, das eine Schmelzflussrate von 0,01 bis 50 g/10 min bei 190°C und einer Last von 2,16 kg gemäß ASTM D1238 aufweist und 80 bis 100 Mol-% Polymereinheiten (a), abgeleitet von 1-Buten, und 0 bis 20 Mol-% Polymereinheiten (b), abgeleitet von mindestens einem α-Olefin mit 2 bis 10 Kohlenstoffatomen, das nicht 1-Buten ist, umfasst.

2. Wasserleitungsgerätschaft gemäß Anspruch 1, wobei die Wasserleitungsgerätschaft eine Wasser/Heißwasser-Zufuhrleitung oder ein Wasservorratstank ist.

3. Wasserleitungsgerätschaft gemäß Anspruch 1 oder 2, wobei das Acetylenschwarz einen mittleren Teilchendurchmesser von 20 bis 50 nm besitzt.

4. Wasserleitungsgerätschaft gemäß mindestens einem der Ansprüche 1 bis 3, wobei das Acetylen-Schwarz eine DBP-Absorptionsmenge von 100 bis 250 ml/100 g aufweist.

5. Wasserleitungsgerätschaft gemäß mindestens einem der Ansprüche 1 bis 4, wobei der Isotaxie-Index des 1-Buten-Homopolymers und/oder des auf 1-Buten basierenden Copolymers (A) mindestens 90 beträgt.

6. Auf 1-Buten basierende Polymerzusammensetzung (C), wie in mindestens einem der Ansprüche 1 oder 3 bis 5 definiert.

7. Formartikel, umfassend eine auf 1-Buten basierende Polymerzusammensetzung (C), wie in mindestens einem der Ansprüche 1 oder 3 bis 5 definiert.

## Revendications

1. Equipement de canalisation d'eau, comprenant une composition (C) de polymère à base de 1-butène qui contient 0,01 à 5,0 parties en poids de noir d'acétylène (B) pour 100 parties en poids d'un homopolymère de 1-butène et/ou d'un copolymère à base de 1-butène (A), qui présente un indice de fluidité à chaud, mesuré, selon la norme ASTM D-1238, à 190 °C sous une charge de 2,16 kg, de 0,01 à 50 g/10 min et qui comprend de 80 à 100 % en moles de motifs de polymère (a) dérivés du 1-butène et de 0 à 20 % en moles de motifs de polymère (b) dérivés d'au moins une α-oléfine autre que le 1-butène et comportant 2 à 10 atomes de carbone.

2. Equipement de canalisation d'eau conforme à la revendication 1, lequel équipement de canalisation d'eau est une conduite d'alimentation en eau ou en eau chaude ou une cuve de stockage d'eau.

3. Equipement de canalisation d'eau conforme à la revendication 1 ou 2, dans lequel le noir d'acétylène se présente en particules dont le diamètre moyen vaut de 20 à 50 nm.

4. Equipement de canalisation d'eau conforme à l'une des revendications 1 à 3, dans lequel le noir d'acétylène présente un pouvoir d'absorption d'huile de 100 à 250 ml de phtalate de dibutyle pour 100 g.

5. Equipement de canalisation d'eau conforme à l'une des revendications 1 à 4, dans lequel l'homopolymère de 1-butène et/ou le copolymère à base de 1-butène (A) présente un indice d'isotacticité d'au moins 90.

6. Composition (C) de polymère à base de 1-butène, qui présente les caractéristiques indiquées dans l'une des revendications 1 et 3 à 5.

7. Article moulé comportant une composition (C) de polymère à base de 1-butène qui présente les caractéristiques indiquées dans l'une des revendications 1 et 3 à 5.
